Europäisches Patentamt

European Patent Office

Office européen des brevets

(19)

(11) Publication number: **0 295 664 B1**

# EUROPEAN PATENT SPECIFICATION

(12)

(45) Date of publication of the patent specification:
14.11.90

(51) Int. Cl.⁵: **F04C 29/00, F16C 35/06**

(21) Application number: 88109573.1

(22) Date of filing: 15.06.88

(54) Compressor.

(30) Priority: 16.06.87 JP 91333/87 U

(43) Date of publication of application:
21.12.88 Bulletin 88/51

(45) Publication of the grant of the patent:
14.11.90 Bulletin 90/46

(84) Designated Contracting States:
DE FR GB IT SE

(56) References cited:
EP-A- 0 069 531
FR-A- 2 391 863

PATENT ABSTRACTS OF JAPAN, vol. 10,
no. 277 (M-519)[2333], 19th September 1986; &
JP-A-61 99 723 (HITACHI LTD) 17-05-1986

(73) Proprietor: SANDEN CORPORATION, 20 Kotobuki-cho,
Isesaki-shi Gunma, 372(JP)

(72) Inventor: Miyazawa, Kiyoshi, 1424-1 Itahana, Annaka-shi
Gunma, 379-21(JP)
Inventor: Shimizu, Shigemi, 425 Higashiarai,
Sakai-machi Sawa-gun Gunma, 370-01(JP)

(74) Representative: Prüfer, Lutz H., Dipl.-Phys., Harthauser
Strasse 25d, D-8000 München 90(DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a compressor, and more particularly, to a compressor with a radial bearing for supporting a drive shaft as disclosed e.g. in EP-A 069 531.

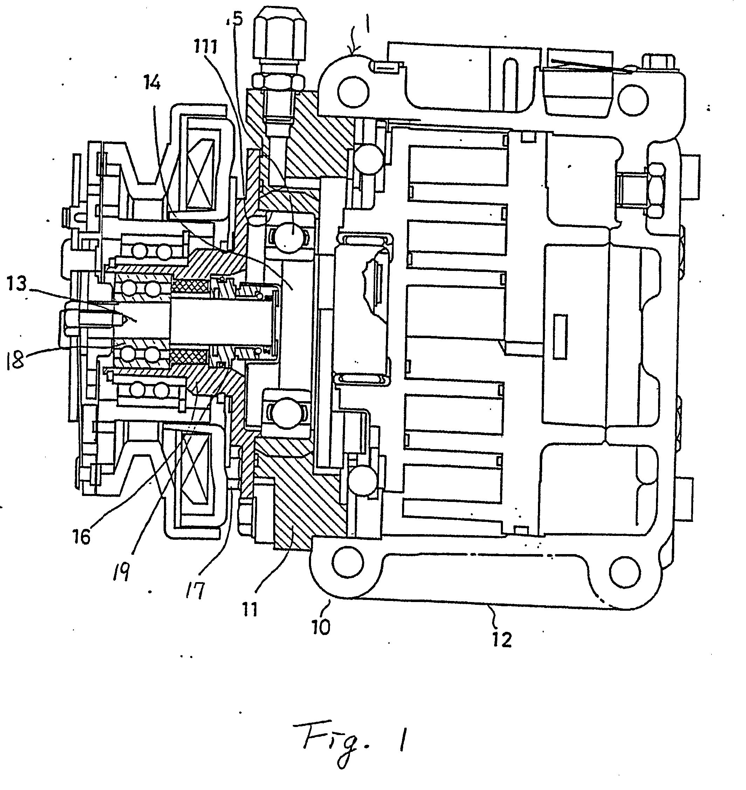

Referring to Figure 1, the construction of a conventional scroll type compressor is shown. A compressor 1 includes a compressor housing 10 which comprises a front end plate 11 and a cup-shaped housing 12 fixed on one end surface of front end plate 11. A drive mechanism and compression mechanism for compression operation are disposed in compressor housing 10.

An opening 111 for penetration of a drive shaft 13 is formed in front end plate 11 at the center thereof. One end of drive shaft 13 is fixedly connected with an annular disc 14 which is rotatably supported on a radial bearing 15 which is fixedly disposed in opening 111. The other end of drive shaft 13 extends to the outside through the cavity of a tubular front boss 16 which is securely fixed on the outer end surface of front end plate 11 by bolts 17. A radial bearing 18 is fixedly disposed on the inner surface of tubular front boss 16 for rotatably supporting the other end of drive shaft 13. A shaft seal mechanism 19 is disposed between the inner surface of tubular front boss 16 and the outer surface of drive shaft 13 at the side of front end plate 11 rather than radial bearing 18 for sealing the interior of compressor housing 10 thereby preventing refrigerant and lubricating oil therein from leaking to the outside.

In the above-mentioned construction, shaft seal mechanism 19 needs to be replaced more frequently than any other parts as shaft seal mechanism 19 is easily broken down. Accordingly, it is desirable to enable to easily maintain shaft seal mechanism 19. The maintenance of shaft seal mechanism 19 in the above compressor is made by turns as follows. Fixture between front boss 16 and front end plate 11 is first released by unfastening bolts 17. Front boss 16 is second detached from front end plate 11. At the same time, radial bearing 18 which is fixedly disposed within front boss 16 is removed from drive shaft 13 together with front boss 16. Shaft seal mechanism 19 is third removed through the end of drive shaft 13.

However, the above replacement process is complicated thereby causing high maintenance costs.

Further, since front boss 16 and front end plate 11 are made separately and have to be assembled, the manufacturing costs are high.

In JP-A 6 199 723 it has been proposed in connection with a bearing for an electrical motor to mount the inner bearing ring on a cylindrical part which is closed on one end by a cap having a hole therein. By connecting a high pressure hose to the hole the cylindrical part may be pulled off together with the bearing.

However, a special element has to be manufactured and a high pressure hose has to be available to remove the bearing.

It is a primary object of the present invention to provide a compressor with a radial bearing for supporting a drive shaft having low maintenance costs.

It is another object of the present invention to provide a compressor with a radial bearing for supporting a drive shaft having low manufacturing costs.

The compressor according to the present invention is featured in claim 1.

Further objects, features and other aspects of this invention will be understood form the following detailed description of a preferred embodiment of this invention with reference to the annexed drawings.

Figure 1 is a cross-sectional view of a conventional scroll type compressor.

Figure 2 is a cross-sectional view of a front housing construction which includes a radial bearing for supporting a drive shaft in accordance with one embodiment of this invention.

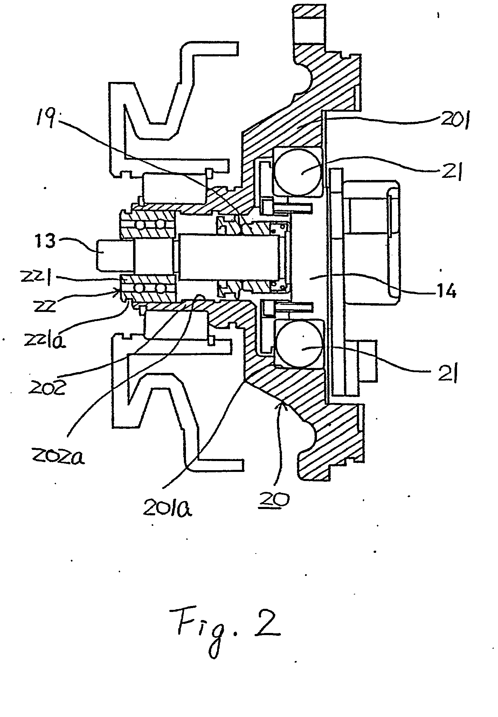

Referring to Figure 2, a front housing construction including a radial bearing for supporting a drive shaft in accordance with one embodiment of this invention is shown. An opening of cup-shaped casing 12 is closed by a front housing 20 which integrally includes a front end plate portion 201 and a tubular front boss portion 202. A first penetration hole 201a is formed within front end plate portion 201 at the center thereof and a second penetration hole 202a is also formed within tubular front boss portion 202 to communicate with first penetration hole 201a, so that drive shaft 13 extends to the outside through first and second penetration holes 201a and 202a. Annular disc 14 of drive shaft 13 is rotatably supported with the inner surface of first penetration hole 201a through a radial bearing 21 which is fixedly disposed in first penetration hole 201a. The other end of drive shaft 13 is also rotatably supported with tubular front boss portion 202 through a radial bearing 22 which is fixedly disposed between the inner surface of second penetration hole 202a and the outer surface of drive shaft 13. Shaft seal mechanism 19 is disposed on the outer surface of drive shaft 13 in abutting with first and second penetration holes 201a and 202a to prevent refrigerant gas and lubricating oil from leaking to the outside through both penetration holes 201a and 202a.

Radial bearing 22 is provided with an exposed portion 221 at one end thereof. Annular groove 221a is formed on the outer surface of exposed portion 221 to surround thereto. Accordingly, replacement of radial bearing 22 is easily made by using a jig as to hung annular groove 221a. Therefore, in the above compressor housing, shaft seal mechanism 19 can be easily taken off from drive shaft 13 by pulling radial bearing 22 out from the outside thereby maintenance performance for replacement of a shaft seal mechanism is improved.

This invention has been described in detail in connection with a preferred embodiment, but this is an example only and this invention is not restricted thereto.

## Claims

1. A compressor (1) including a compressor housing (10), a front housing (20) attached to one end of said compressor housing, a drive shaft (13) rotatably supported whithin said front housing (20) through radial bearings (31, 22), and a shaft seal mechanism (19) disposed between both said radial bearings (31, 22) for sealing the inside from the outside of said compressor housing, characterized in that one of said radial bearings is provided with an annular groove (221a) on the outer surface of said radial bearing to facilitate pulling-off said bearing from said drive shaft (13).

2. The compressor according to claim 1, characterized in that said compressor housing (10) is integrally formed with a front end plate portion (11) provided with an opening for extending said drive shaft (13) to the outside, a tubular front boss portion (201) being provided communicating with said opening and surrounding said drive shaft (13).

## Patentansprüche

1. Kompressor (1) mit einem Kompressorgehäuse (10), einem an einem Ende des Kompressorgehäuses angebrachten Frontgehäuse (20), einer drehbar in dem Frontgehäuse (20) durch Radiallager (21, 22) gelagerten Antriebswelle (13) und einem zwischen den beiden Lagern (21, 22) zum Abdichten des Inneren von dem äußeren des Kompressorgehäuses vorgesehenen Wellenabdichtungsmechanismus (19), dadurch gekennzeichnet, daß eines der Radiallager mit einer ringförmigen Rille (221a) auf der äußeren Oberfläche des Radiallagers zum Erleichtern des Abziehens des Lagers von der Antriebswelle (13) versehen ist.

2. Kompressor nach Anspruch 1, dadurch gekennzeichnet, daß das Kompressorgehäuse (10) einstückig mit einem Vorderplattenabschnitt (11) gebildet ist, der mit einer Öffnung so versehen ist, daß sich die Antriebswelle (13) nach außen erstrecken kann, wobei ein in Verbindung mit der Öffnung stehender und die Antriebswelle umgebender runder vorderer Vorsprung (201) vorgesehen ist.

## Revendications

1. Compresseur (1) comprenant un carter de compresseur (10), un carter frontal (20) fixé à une extrémité dudit carter de compresseur, un arbre d'entraînement (13) supporté en rotation à l'intérieur dudit carter frontal (20) par des paliers radiaux (21, 22) et un mécanisme d'étanchéité de l'arbre (19) intercalé entre lesdits paliers radiaux (21, 22) pour assurer l'étanchéité entre l'intérieur et l'extérieur dudit carter de compresseur, caractérisé en ce que l'un desdits paliers radiaux est pourvu d'un évidement annulaire (221a) sur la surface extérieure dudit palier radial pour faciliter la traction sur ledit palier afin de le retirer dudit arbre d'entraînement (13).

2. Compresseur selon la revendication 1, caractérisé en ce que ledit palier de compresseur (10) est formé de manière à faire partie intégrante de la partie formant plaque d'extrémité avant (11) pourvue d'une ouverture pour l'extension dudit arbre d'entraînement (13) vers l'extérieur, une partie formant bossage avant tubulaire (201) étant prévue de manière à communiquer avec ladite ouverture et à entourer ledit arbre d'entraînement (13).

Fig. 1

Fig. 2